# EUROPÄISCHE PATENTSCHRIFT

(11) **EP 4 172 977 B1**
(45) Veröffentlichungstag und Bekanntmachung des Hinweises auf die Patenterteilung: **06.05.2026**
(21) Anmeldenummer: 21735573.4
(22) Anmeldetag: 08.06.2021
(51) Int. Cl.: G09B 23/30, G09B 23/34, G09B 23/28

(54) **MEDIZINISCHES TRAININGSMODELL MIT MINDESTENS EINEM BLUTGEFÄSSMODELL**
MEDICAL TRAINING MODEL WITH AT LEAST ONE BLOOD VESSEL MODEL
MODÈLE D'ENTRAÎNEMENT MÉDICAL AVEC AU MOINS UN MODÈLE DE VAISSEAU SANGUIN

(30) Priorität: 24.06.2020 DE 102020003786
(43) Veröffentlichungstag der Anmeldung: 03.05.2023
(73) Patentinhaber: Technische Universität Hamburg, 21073 Hamburg (DE); Universitätsklinikum Hamburg-Eppendorf, 20246 Hamburg (DE)
(72) Erfinder: SPALLEK, Johanna, 20251 Hamburg (DE); KUHL, Juliane, 49637 Menslage (DE); KRAUSE, Dieter, 21244 Buchholz (DE); BUHK, Jan-Hendrik, 20246 Hamburg (DE); FRÖLICH, Andreas, 20246 Hamburg (DE); FIEHLER, Jens, 20246 Hamburg (DE)
(74) Vertreter: Sparing Röhl Henseler
(86) Internationale Anmeldenummer: PCT/EP2021/065251
(87) Internationale Veröffentlichungsnummer: WO 2021/259627

(56) Entgegenhaltungen:
- EP-A1- 0 825 582
- DE-A1- 102015 011 062
- DE-A1- 102016 108 152
- JOHANNA SPALLEK ET AL: "Design for Mass Adaptation of the Neurointerventional Training Model HANNES with Patient-Specific Aneurysm Models", PROCEEDINGS OF THE DESIGN SOCIETY: INTERNATIONAL CONFERENCE ON ENGINEERING DESIGN, vol. 1, no. 1, 1 July 2019 (2019-07-01), pages 897 - 906, XP055763807, DOI: 10.1017/dsi.2019.94

## Beschreibung

Die Erfindung betrifft ein medizinisches Trainingsmodell nach dem Oberbegriff des Anspruchs 1.

Ein medizinisches Trainingsmodell bietet eine Vielzahl von verschiedenen Verwertungspotentialen und kann unter anderem für die Aus- und Weiterbildung von Medizinern in der minimalinvasiven Katheterbehandlung von Blutgefäßkrankheiten wie Aneurysmen (Aussackung der Gefäßwand) genutzt werden. Dadurch werden die für eine Behandlungssimulation und Schulungen verwendeten Tierversuche ersetzt und durch eine Nachstellung relevanter Gefäße eine realitätsnahe Abbildung der menschlichen Anatomie ermöglicht. Beschrieben ist ein solches Trainingsmodell in Spallek, J.; Kuhl, J.; Wortmann, N.; Buhk, J.-H.; Frölich, A. M.; Nawka, M. T.; Kyselyova, A.; Fiehler, J.; Krause, D.: Design for Mass Adaption of the Neurointerventional Training Model HANNES with Patient-Specific Aneurysm Models. In: Proceedings of the 22nd International Conference on Engineering Design (ICED19), Delft, The Netherlands, 5-8 August 2019, 897 - 906.

Die Beobachtung der medizinischen Instrumente erfolgt bei den Trainingsmodellen üblicherweise durch den Einsatz von individualisierbaren Blutgefäßmodellen in einer Angiographieanlage mit Röntgenstrahlen.

Aus DE 10 2014 210 893 A1 sind bekannt Bildaufnahmeeinrichtungen im medizinischen Bereich, beispielsweise Röntgeneinrichtungen mit einem C-Bogen, an dem gegenüberliegend ein Röntgenstrahler und ein Röntgendetektor angeordnet sind. Zur Ansteuerung wird dem Bediener eine Bedieneinrichtung zur Verfügung gestellt, beispielsweise ein Touchscreen. Derartige Bildaufnahmeeinrichtungen werden im Kardio- beziehungsweise Vaskularbereich eingesetzt. Die Röntgeneinrichtungen mit einem C-Bogen werden insbesondere zur Bildgebung in der Gefäßchirurgie (Angiographie) verwendet. In diesem Kontext ist es ein wesentliches Ziel, bestimmte Gefäße beziehungsweise wenigstens einen Teil des Gefäßbaumes nach Injektion eines Kontrastmittels darzustellen.

Ein bekanntes Verfahren in diesem Zusammenhang ist die digitale Subtraktionsangiographie (DSA). In diesem Rahmen wird zunächst eine normale Röntgenaufnahme des relevanten Zielbereichs erstellt, das sogenannte Maskenbild. Nach Verabreichung eines Kontrastmittels in das Gefäßsystem breitet sich dieses im Gefäßsystem aus und es werden, insbesondere während eines gesamten Zeitabschnitts, weitere Messbilder erzeugt, in denen das Kontrastmittel deutlich zu sehen ist. Diese Bilder werden üblicherweise als Füllungsbilder bezeichnet. Um die Gefäße ohne andere, störende Strukturen darstellen zu können, wird von den Füllungsbildern das Maskenbild (oft auch als Leerbild bezeichnet) subtrahiert.

Nachteilig ist, dass anhand der üblichen Trainingsmodelle zum Training und dem Erlernen der notwendigen Behandlungsfähigkeiten, insbesondere zur Behandlung von Blutgefäßkrankheiten, nicht auf schädliche Röntgenstrahlen verzichtet werden kann, da eine Beobachtung der Instrumente ansonsten nicht möglich ist.

Alternativ werden röntgenfreie Virtual Reality Simulationen genutzt, bei denen den Trainierenden ein haptisches Feedback ähnlich zu einer Behandlung am Menschen gegeben werden soll. Die Realisierung ist jedoch nur bedingt vergleichbar mit der realen Behandlung. Auch können nur bestimmte Trainingssituationen eingestellt werden. Die medizinischen Instrumente unterscheiden sich von den in der Realität genutzten. Bilder und Lage der Instrumente werden simuliert, wobei die Erzeugung der Bilder auf eine Rückmeldung von Sensoren zurückgreift.

Insoweit ist aus US 5, 638,819 A ein Verfahren bekannt, mit dem ein medizinisches Instrument, insbesondere eine Biopsienadel oder ein Endoskop, entlang einer gewünschten Trajektorie in einem Patienten, insbesondere in das Gehirn eines Patienten, eingeführt werden kann. Zur Lokalisierung des Instruments ist an seinem nicht in den Patienten eingeführten Teil ein Sensor angebracht, dessen Position bezüglich eines Bezugskoordinatensystems mit einer geeigneten Messeinrichtung bestimmt werden kann. Zur Navigation des Instruments wird dessen Position in ein zweidimensionales Tomographiebild eingeblendet, wobei gleichzeitig ein Live-Videobild des Endoskops angezeigt wird. Dieses bekannte Verfahren eignet sich jedoch nur zur Lokalisierung und Navigation starrer medizinischer Instrumente, da nur in diesem Fall von der Position des an dem außerhalb des Patienten befindlichen Teils des Instruments angebrachten Sensor auf die Position des in dem Patienten befindlichen Teil des Instruments geschlossen werden kann. Ein solches System auf ein Trainingsmodell zu übertragen ist nachteilig, weil die zu erlernenden Behandlungsfähigkeiten für Blutgefäßerkrankungen anders sind.

Aus DE 100 51 244 A1 ist ein röntgenfreies intravaskuläres Lokalisierungs- und Bildgebungsverfahren bekannt, bei dem die Bilderfassungsvorrichtungen im einzuführenden Endbereich des medizinischen Instruments angeordnet sind. Bildinformationen der Umgebung des medizinischen Instruments werden erfasst und dabei anhand der ermittelten Position die Position des medizinischen Instruments in einem Übersichtsbild des Untersuchungsobjekts angezeigt. Die Bilddatensätze selbst können mittels eines beliebigen Bildgebungsverfahrens gewonnen sein, also beispielsweise Kernspintomographie, Computertomographie, mittels eines Röntgenverfahrens, insbesondere eines dreidimensionalen Rotations-Röntgenverfahrens, oder mittels eines Ultraschallverfahrens. Nachteilig ist auch hier, dass ein Trainingsszenario keine Anwendung realer Instrumente und realitätsnahes Sondieren und Behandeln von zerebralen Aneurysmen erlaubt.

Aus DE 10 2015 011 062 A1 ist bekannt eine Einrichtung zur visuellen Strömungsanalyse von transparenten Gefäßmodellen, die von einer Glyzerinlösung blutähnlicher Viskosität physiologisch durchströmt wird, und mit reflektierenden Polymerpartikeln in der Größenordnung von Erythrozyten angereichert ist. Dabei wird eine Lichtfeldkamera zum Aufzeichnen der Reflexe bewegter Polymerkügelchen eingesetzt. Die Flussinformation am Gefäß und deren Veränderung durch Eindringung von Devices zur Therapie von Aneurysmen wird die Qualität notwendiger Interventionen durch verbesserte Positionierung, Auswahl, Design oder Form von eingesetzten Implantaten wie Coils, Stents oder Flow-Divertern überprüft und optimiert. Solche Flussinformationen ermöglichen es jedoch nicht, dem Mediziner ein Trainingsmodell bereit zu stellen, das zur Behandlungsnachstellung von Katheterbehandlungen dient.

Aus DE 10 2016 108 152 A1 ist ebenfalls ein dreidimensionales gefäßchirurgisches Simulationsmodell bekannt, bei dem Strömungsbilder eines Modells in einem Aufnahmeraum durchgeführt werden. Das Modell befindet sich wiederum in einer Zirkulationsflüssigkeit, insbesondere ein Glycerin-Wasser-Gemisch. Beschrieben ist somit ein offenes Fluss-System, bei dem es nicht zur Anwendung eines realen Behandlungsinstruments kommt, sondern Strömungsverhältnisse vermessen werden, die Rückschlüsse auf das Gefäßmodell liefern. Es fehlt erneut an der Ausbildung als ein Trainingsmodell zur Simulation medizinischer Fähigkeiten. Hierfür ist das Tracking eines realen Instruments und der Kontrast desselben zum Gefäß notwendig. Dies ist anhand von Strömungsbildern nicht erkennbar.

Aufgabe der Erfindung ist es daher, ein Trainingsmodell zu schaffen, mit dessen Hilfe in einfacher Weise eine Übungssituation im Zusammenhang mit den Stromgebieten der arteriellen Blutversorgung, beispielsweise des Gehirns, geschaffen werden kann, die den entsprechenden realen Verfahrenssituationen möglichst nahe kommt. Gleichzeitig soll dieser Vorteil durch eine Vorrichtung ermöglicht werden, die einfach und kostengünstig in der Herstellung ist.

Diese Aufgabe wird durch die Merkmale des Anspruchs 1 gelöst.

Hierdurch wird ein medizinisches Trainingsmodell zur Behandlungsnachstellung von minimalinvasiven Katheterbehandlungen, beispielsweise intrakraniellen Aneurysmen, geschaffen, das röntgenfrei bzw. ohne zwingenden Bedarf an Röntgenstrahlen arbeitet. Die Röntgenstrahlen können durch eine Strahlungssimulation mittels eines optischen Systems ersetzt werden. Mit dem röntgenfreien Gesamtsystem wird ein sicheres Training von großer Dauer möglich, ohne die Trainierenden schädlichen Strahlungen auszusetzen. Dabei können gewohnte Abläufe und Darstellungen aus der Angiographie beibehalten und erlernt werden. Dies gilt insbesondere für die Simulation neurointerventioneller Behandlungen für die Aus- und Weiterbildung von Medizinern. Reale Instrumente werden angewendet. Ein realitätsnahes Sondieren und Behandeln von zerebralen Aneurysmen ist möglich, wobei physiologische Eigenschaften wie Temperatur, Blutfluss und Pulsation nachgestellt werden können.

Der erfindungsgemäße Festkörperblock kann dabei über seine Außengeometrie die Bildgebungseigenschaften beeinflussen und davon isoliert als Innengeometrie Blutgefäßanatomien, gegebenenfalls patientenoriginale Anatomien, aufnehmen. Der Festkörperblock kombiniert folglich vorzugsweise zwei unterschiedliche Funktionseinheiten an unterschiedlichen Orten mit wählbarem Raumabstand. Für eine Bildgebung mit beispielsweise einer Kamera ist die Außengeometrie vorzugsweise mit einer optischen Oberfläche versehen, die die Reflexion reduziert, um die Transmission des Mediums Blockaneurysma zu erhöhen.

Die Darstellung von Blutgefäßen mittels Bildgebungsverfahren zur Simulation medizinischer Tätigkeit kann unter Einsatz und/oder ohne Einsatz von Röntgenstrahlen erfolgen. Dies gilt insbesondere für die Erstellung einer digitalen Subtraktionsbildgebung sowie einer Roadmap, wobei Bilddatensätze, die mittels eines Röntgenverfahrens gewonnen werden müssten, nicht erforderlich sind und auch ganz entfallen können. Der Vorteil, durch die Subtraktion störende Bildaspekte unsichtbar zu machen, kann genutzt werden.

Eine röntgenfreie Umgebung reduziert bzw. vermeidet die Strahlenbelastung der Trainierenden während des Trainings. Dadurch ist möglich, dass Dauer und Häufigkeit von Trainings erhöht werden können. Trainings für Personen, die durch Röntgenstrahlen massiv gefährdet werden, z.B. Schwangere, sind möglich.

Vorzugsweise umfasst das optische System mindestens eine Kamera und vorzugsweise mindestens eine Lichtquelle, die in ein Kopfmodell integriert werden können. Ein solches Kopfmodell kann die Möglichkeit bieten, das System aus Kamera und Lichtquelle in beispielsweise Grad-Schritten um ein Aneurysmamodell herum zu drehen, um wie vorzugsweise bei einem C-Bogen einer Röntgenanlage unterschiedliche Beobachtungs-/Projektionsebenen und Schichten auf ein Aneurysma einzustellen. Vorzugsweise kann als Lichtquelle ein Gegenlichtpanel verwendet werden. Das Kopfmodell kann als eine Aufstelleinrichtung mit translatorischen und/oder rotatorischen Bewegungsfreiheitsgraden ausgebildet sein, wobei zudem der Raumabstand zwischen Kamera und Lichtquelle veränderbar wählbar sein kann. Es bedarf also keiner direkten Verbindung zwischen Kamera und Lichtquelle.

Außerdem ist eine einfache Integration mit einer schnellen Austauschbarkeit von patientenspezifischen Gefäßgeometrien in Kombination mit der Nachstellung eines Blutkreislaufsystems möglich. Realitätsnahe Trainingsszenarien von neurointerventionellen Behandlungen werden erfindungsgemäß möglich, und zwar ohne Strahlenbelastung. Ferner ist eine Mobilität des Trainingsmodells gegeben, wodurch der Einsatz außerhalb einer Angiographieanlage möglich ist. Eine Erhöhung der Anzahl der Trainingsteilnehmer ist dadurch möglich. Es kann ein Trainingsmodell in einer röntgenfreien Umgebung bereitgestellt werden, das den für die minimalinvasive Gefäßbehandlung relevanten Gefäßraum mit der Möglichkeit des Austauschs einzelner gegebenenfalls patientenoriginaler Geometrien nachbildet und dabei ein Blutkreislaufersatzsystem anbietet. Die Erfindung ermöglicht einen röntgenfreien Einsatz in der Angiographie.

Der Aufbau des medizinischen Trainingsmodells kann modular gestaltet sein und kann bestehen aus standardisierten Komponenten (in jedem Trainingsszenario genutzt), varianten Komponenten (Trainingsszenario prägende Komponenten) und patientenspezifische Komponenten (entsprechend einer originalen patientenspezifischen Anatomie angepasst).

Die vorteilhafte Anwendung realer Instrumente, realitätsnahes Sondieren und Behandeln von zerebralen Aneurysmen, kann zudem kombiniert werden mit einem Nachstellen von physiologischen Eigenschaften, wie Temperatur, Blutfluss und Pulsation. Die hohe Geometriefreiheit additiver oder generativer Fertigungsverfahren ermöglicht dabei die Fertigung von Gefäßmodellen, die eine exakte dreidimensionale Nachbildung von patientenindividuellen intrakraniellen Aneurysmen mit den anliegenden Gefäßinnenräumen sind.

Weitere Ausgestaltungen und Vorteile der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt eine schematische Darstellung eines ersten Ausführungsbeispiels des medizinischen Trainingsmodells,
Fig. 2 zeigt eine schematische Darstellung eines zweiten Ausführungsbeispiels des medizinischen Trainingsmodells,

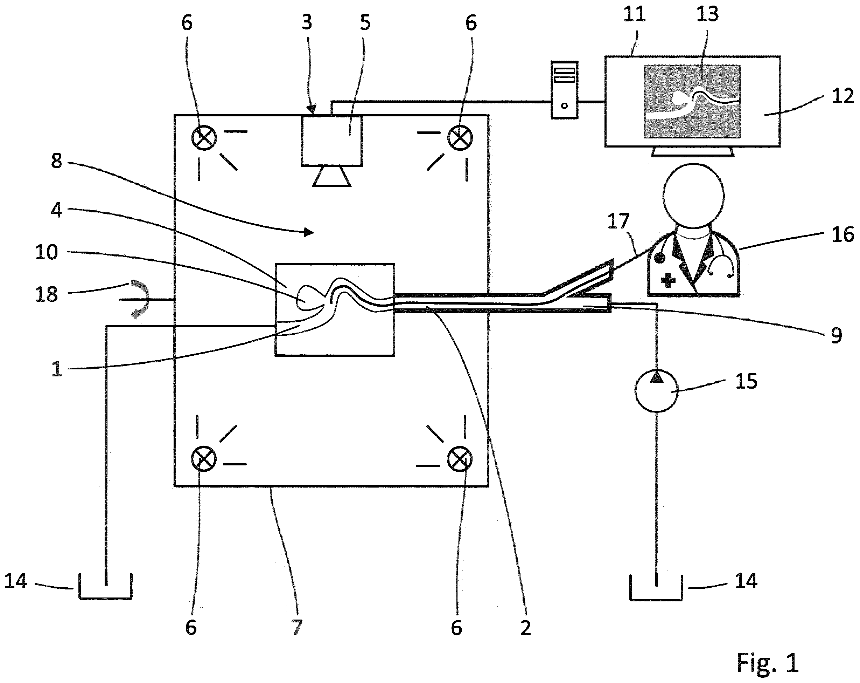

Wie Fig. 1 zeigt, betrifft die Erfindung ein medizinisches Trainingsmodell mit mindestens einem Blutgefäßmodell 1 das in mindestens einer Übungsregion an ein anatomisch nachgebildetes Blutkreislaufersatzsystem 2 anschließbar ist. Das Trainingsmodell umfasst ferner eine Bildaufnahmeeinrichtung 3 zum Erstellen von Messbildern des mindestens einen Blutgefäßmodells 1. Weiterhin umfasst das Trainingsmodell eine Bildverarbeitungseinrichtung 11, die die aufgenommenen Messbilder in eine bildgebende Blutgefäßdarstellung umwandelt und auf einem Bildschirm 12 anzeigbar macht.

Für eine vorzugsweise röntgenfreie Bildgebung ist die Bildaufnahmeeinrichtung 3 als ein fotooptisches System 8 ausgebildet, das Durchlichtbilder 13 als Messbilder des mindestens einen Blutgefäßmodells 1 aufnimmt. Dazu ist das mindestens eine Blutgefäßmodell 1 in einem transparenten Festkörperblock 4 nachgebildet angeordnet. Das Blutgefäßmodell 1 ist vorzugsweise als eine Hohlform 10 in dem Festkörperblock 4 ausgebildet. Alternativ oder zusätzlich kann die Hohlform 10 mit einem bildgebenden Medium zumindest zeitweilig gefüllt sein.

Der transparente Festkörperblock 4 weist vorzugsweise glatte und reflexionsreduzierte Oberflächen auf, die eine Raumkurve des Blutgefäßmodells 1 sandwichartig begrenzen. Eine Außengeometrie des Festkörperblocks 4 ist folglich vorzugsweise mit einer optischen Oberfläche versehen, die die Reflexion reduziert und die Transmission des Mediums eines künstlichen transparenten Blockaneurysmas zu erhöhen. Der Festkörperblock 4 ist vorzugsweise quaderförmig ausgebildet mit einer Außengeometrie, die abhängig von den Bildgebungseigenschaften wählbar ist. Die Innengeometrie des Festkörperblocks 4 wird bestimmt durch die Nachbildung eines Aneurysmas, das gegebenenfalls patientenspezifisch nachgebildet ist.

Die Bildaufnahmeeinrichtung 3 ist gemäß einem ersten Ausführungsbeispiel ausgebildet als ein fotooptisches System 8, das vorzugsweise mindestens eine Kamera 5 und mindestens eine Lichtquelle 6 aufweist. Die mindestens eine Lichtquelle 6 dient einer Beleuchtung des Festkörperblocks 4. Die Richtung(en) einer Beleuchtung ist/sind wählbar. Seitenlicht, Auflicht, Gegenlicht usw. sind einzeln als auch kombinierbar einsetzbar. Gemäß Fig. 1 sind beispielsweise vier Lichtquellen 6 vorgesehen, die den Festkörper 4 aus unterschiedlichen Richtungen anstrahlen. Wesentlich für die Beleuchtung ist, dass das Innere des Festkörperblocks 4, das Blutgefäßmodel 1 sichtbar und abbildbar ist. Die Kamera 5 und die Lichtquelle 6 dienen der Erstellung eines reellen Bildes des Festkörperblocks 4 und des Gefäßmodells 1.

Vorzugsweise sind die Kamera 5 und die Lichtquelle 6 des fotooptischen Systems 8 integrierbar in eine Aufstelleinrichtung 7 mit translatorischen und/oder rotatorischen Bewegungsfreiheitsgraden und sind gegebenenfalls zueinander positionierbar.

Die Aufstelleinrichtung 7 kann als ein Vollbogenförmiges- oder C-bogenförmiges Kopfmodell wählbarer Geometrie zur Einstellung unterschiedlicher Beobachtungs-Projektionsebenen und/oder Sichten auf das mindestens eine Blutgefäßmodell 1 ausgebildet sein und kann dazu horizontal, vertikal sowie um Schwenkachsen bewegbar sein. Ein C-bogenförmiges Kopfmodell ist vorzugsweise vorgesehen zur Einstellung unterschiedlicher Beobachtungs-Projektionsebenen und/oder Sichten auf das mindestens eine Blutgefäßmodell 1. Die Aufstelleinrichtung 7 kann dazu horizontal, vertikal sowie um Schwenkachsen bewegbar sein wie der Pfeil 18 symbolhaft verdeutlichen soll.

Die Bildverarbeitungseinrichtung 11 ist vorzugsweise programmgesteuert für eine digitale Subtraktionsbildgebung ausgelegt. Für das Erstellen von Leerbildern und Füllungsbildern des mindestens einen Blutgefäßmodells 1 können Farbflüssigkeiten in das mindestens eine Blutgefäßmodell 1 injizierbar sein.

Das mindestens eine Blutgefäßmodell 1 ist vorzugsweise ein additiv gefertigtes, gegebenenfalls individualisierbares Blutgefäßmodell 1, das austauschbar in mindestens einer Übungsregion an ein Fluidsystem eines anatomisch nachgebildeten Trainingsmodells mit einem jeweils gegebenenfalls patientenspezifisch nachgebildeten Lumen des Blutkreislaufersatzsystem 2 anschließbar ist.

Das mindestens eine Blutgefäßmodell 1, das mit patientenspezifischer Geometrie nachgebildet sein kann, kann über eine hydraulische Schnellkupplung an das Blutkreislaufersatzsystem 2 anschließbar sein.

Der Festkörperblock 4 ist aus einer Vergussmasse mit verlorener Form eines invers nachgebildeten Blutgefäßmodells 1 oder durch ein additives Fertigungsverfahren hergestellt. Mehrere Übungsregionen mit blutgefäßanatomischer Geometrie können über Schnittstellen implementierbar sein, wodurch das Blutkreislaufersatzsystem 2 zur Simulation des menschlichen Blutkreislaufsystems hinsichtlich Temperatur und Druck des Fluids ausgebildet werden kann. Fluidtank 14 und Fluidpumpe 15 sind gemäß bekannter offener oder geschlossener Hydraulikkreisläufe einsetzbar. Fig. 1 zeigt ferner symbolhaft einen Mediziner 16, der ein reales Instrument 17 in dem Blutgefäßmodell 1 anwendet. Dazu ist das Instrument 17 eingeführt in das Blutkreislaufersatzsystem 2, das dafür einen Zugang, beispielsweise eine Schleuse, aufweist. Bei einem Training wird das Behandlungsinstrument 17 vorzugsweise durch nachgebildete Arterien bis hin zum erkrankten Gefäß geführt. Die Durchleuchtung macht die Bewegungen des Instruments 17 innerhalb des Gefäßmodells sichtbar und ermöglicht dem Mediziner 16, das Instrument 17 gezielt zu bewegen.

Das Blutgefäßmodell 1 ist transparent gefertigt. Diese transparente Ausführung ermöglicht einen großen Kontrast zwischen transparentem Modell 1 und nichttransparentem Behandlungsinstrument 17, wie beispielsweise Mikrokatheter, Führungsdraht oder Coil. Die Fertigung des Modells 1 aus transparentem, insbesondere nicht-flexiblem Material erfolgt in einem transparent gefertigten Kunststoffblock bzw. Festkörperblock 4.

Die Aufstelleinrichtung 7 bzw. das Kopfmodell kann an ein Grundgestell des Trainingsmodells 1 kopfseitig angesetzt werden. Eine Verbindung kann erfolgen über ein im Kopfmodell beispielsweise integrierbares Schädelbasismodell und einen Neurostromweg 9. Das Schädelbasismodell kann die Schädelbasis mit integriertem Gefäßverlauf und einer integrierten Halterung nachstellen.

Das Kopfmodell 7 und das Schädelbasismodell ermöglichen die Positionierung eines oder mehrerer Gefäßmodelle 1, insbesondere sogenannter Aneurysmamodelle. Die Gefäßmodelle 1 können eine oder mehrere Aussackungen aufweisen.

Der vorzugsweise modulare Grundaufbau des Trainingsmodells ermöglicht die Kombination von Modulen, und zwar standardisierten oder varianten Modulen mit austauschbaren individualisierten Modulen. Ein Hauptaugenmerk liegt auf der Integration von patientenspezifischen und individualisierten Geometrien. Patientenspezifische Aneurysmamodelle können beispielsweise auf Grundlage von medizinischen Bilddaten von Patienten in einem standardisierten Individualisierungsprozess additiv, d.h. im Schichtbauverfahren bzw. 3D-Druck, gefertigt werden. Ein Portfolio unterschiedlichster Aneurysmageometrien können als Trainingsgrundlage bereitgestellt werden.

Vorstehend wurde die Erfindung exemplarisch anhand eines neurointerventionellen Trainingsmodells beschrieben. Die Erfindung ist zudem realisierbar bei jedem medizinischen Trainingsmodell, bei dem patientenspezifische oder standardisierte Blutgefäßmodelle in austauschbaren Übungsregionen für Trainingsmethoden platziert werden sollen. Gleiches gilt für Trainingsmodelle, die als Behandlungsmodelle/Simulationsmodelle für beispielsweise wissenschaftliche Zwecke, Forschungszwecke, zur Entwicklung von Instrumenten usw. verwendet werden.

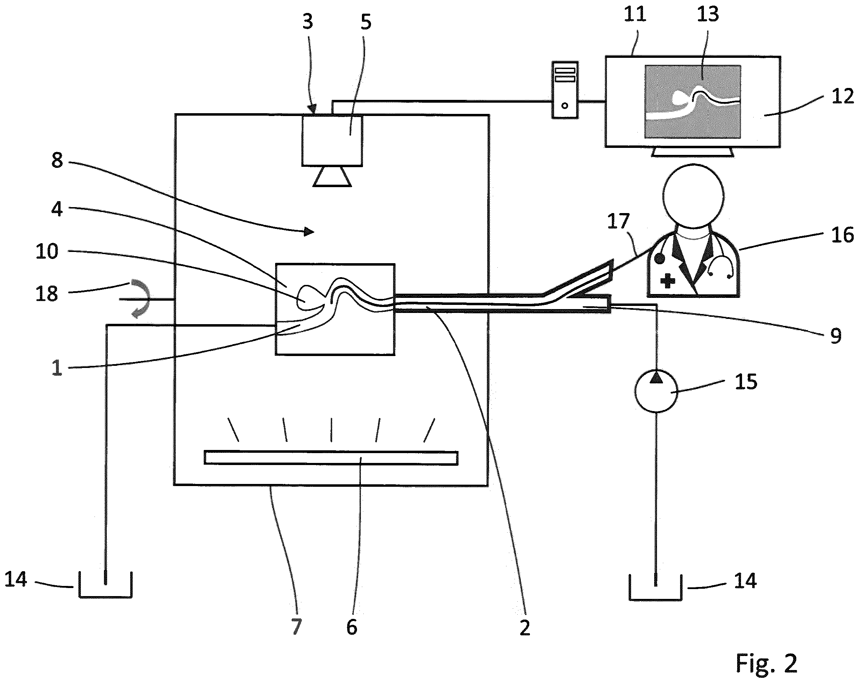

Wie Fig. 2 zeigt, ist die Bildaufnahmeeinrichtung 3 erfindungsgemäß ausgebildet als ein fotooptisches System 8, das mindestens eine Kamera 5 und mindestens ein Gegenlichtpanel 6, zwischen denen der transparente Festkörperblock 4 positionierbar ist, aufweist. Im übrigen gelten die vorstehenden Ausführungen zum ersten Ausführungsbeispiel entsprechend.

## Patentansprüche

1. Medizinisches Trainingsmodell mit mindestens einem Blutgefäßmodell (1), das in mindestens einer Übungsregion an ein anatomisch nachgebildetes Blutkreislaufersatzsystem (2) anschließbar ist und in dem ein reales Instrument (17) angewendet wird, mit einer Bildaufnahmeeinrichtung (3) zum Erstellen von Messbildern des mindestens einen Blutgefäßmodells (1), und mit einer Bildverarbeitungseinrichtung (11), die die aufgenommenen Messbilder in eine bildgebende Blutgefäßdarstellung umwandelt und auf einem Bildschirm (12) anzeigbar macht, die Bildaufnahmeeinrichtung (3) als ein fotooptisches System (8) ausgebildet ist, das Durchlichtbilder (13) als Messbilder des mindestens einen Blutgefäßmodells (1) zur Simulation medizinischer Tätigkeit aufnimmt, **dadurch gekennzeichnet, dass** das mindestens eine Blutgefäßmodell (1) in einem transparent gefertigten Festkörperblock (4) nachgebildet angeordnet ist für einen Kontrast zwischen transparentem Festkörperblock (4) und nichttransparentem Instrument (17), die Durchlichtbilder (13) als Messbilder des mindestens einen Blutgefäßmodells (1) in Gegenlicht aufnehmbar sind und der Festkörperblock (4) aus einer Vergussmasse mit verlorener Form eines invers nachgebildeten Blutgefäßmodells (1) oder durch ein additives Fertigungsverfahren hergestellt ist wobei das fotooptische System (8) mindestens eine Kamera (5) und mindestens eine Lichtquelle (6) mit mindestens einem Gegenlichtpanel (6), zwischen denen der transparente Festkörperblock (4) positionierbar ist), umfasst, die der Feststellung eines reellen Bildes des Festkörperblocks (4) und des Gefäßmodells (1) dienen und der transparente Festkörperblock (4) glatte und reflexionsreduzierte Oberflächen aufweist, die eine Raumkurve des Blutgefäßmodells (1) sandwichartig begrenzen.

2. Medizinisches Trainingsmodell nach einem der Ansprüche 1 **dadurch gekennzeichnet, dass** das fotooptische System (8) mindestens eine Kamera (5) und mindestens eine Lichtquelle (6) umfasst, die in eine Aufstelleinrichtung (7) mit translatorischen und/oder rotatorischen Bewegungsfreiheitsgraden integrierbar sind und dabei zueinander positionierbar sind.

3. Medizinisches Trainingsmodell nach Anspruch 2, **dadurch gekennzeichnet, dass** die Aufstelleinrichtung (7) als ein Vollbogenförmiges- oder C-bogenförmiges Kopfmodell wählbarer Geometrie zur Einstellung unterschiedlicher Beobachtungs-Projektionsebenen und/oder Sichten auf das mindestens eine Blutgefäßmodell (1) ausgebildet ist und das dazu horizontal, vertikal sowie um Schwenkachsen bewegbar ist.

4. Medizinisches Trainingsmodell nach einem der Ansprüche 1 bis 3, **dadurch gekennzeichnet, dass** die Bildverarbeitungseinrichtung (11) programmgesteuert für eine digitale Subtraktionsbildgebung ausgelegt ist.

5. Medizinisches Trainingsmodell nach Anspruch 4, **dadurch gekennzeichnet, dass** für das Erstellen von Leerbildern und Füllungsbildern des mindestens einen Blutgefäßmodells (1) Farbflüssigkeiten in das mindestens eine Blutgefäßmodell (1) injizierbar sind.

6. Medizinisches Trainingsmodell nach einem der Ansprüche 1 bis 5, **dadurch gekennzeichnet, dass** das mindestens eine Blutgefäßmodell (1) ein individualisierbares Blutgefäßmodell (1) ist, das austauschbar in mindestens einer Übungsregion an ein Fluidsystem eines anatomisch nachgebildeten Trainingsmodells mit einem jeweils patientenspezifisch nachgebildeten Lumen (9) anschließbar ist.

7. Medizinisches Trainingsmodell nach Anspruch 6, **dadurch gekennzeichnet, dass** das mindestens eine Blutgefäßmodell (1) ein mit patientenspezifischer Geometrie nachgebildetes Blutgefäßmodell (1) ist, das über eine hydraulische Schnellkupplung an das Blutkreislaufsystem (2) anschließbar ist.

8. Medizinisches Trainingsmodell nach einem der Ansprüche 1 bis 7, **dadurch gekennzeichnet, dass** mehrere Übungsregionen mit blutgefäßanatomischer Geometrie über Schnittstellen implementierbar sind.

9. Medizinisches Trainingsmodell nach einem der Ansprüche 1 bis 8, **dadurch gekennzeichnet, dass** das Blutkreislaufersatzsystem (2) zur Simulation des menschlichen Blutkreislaufsystems hinsichtlich Temperatur und Druck des Fluids ausgebildet ist.

## Claims

1. Medical training model having at least one blood vessel model (1), that in at least one practice region can be connected to an anatomically replicated substitute blood circulation system (2) and in which a real instrument (17) is used, further having an image recording device (3) for creating measurement images of the at least one blood vessel model (1), and having an image processing device (11) which converts the recorded measurement images into an imaging representation of the blood vessel and displays them on a screen (12), the image recording device (3) is designed as a photo-optical system (8), that records transmitted-light images (13) as measurement images of the at least one blood vessel model (1) for the simulation of medical activity, **characterized in that**, the at least one blood vessel model (1) is replicated in a transparently produced solid-body block (4) to create a contrast between the transparent solid-body block (4) and the non-transparent instrument (17), the transmitted light images (13) are recordable as measurement images of the at least one blood vessel model (1) against a backlight, and the solid-body block (4) is made from a casting compound having a lost mould of an inversely replicated blood vessel model (1) or by an additive manufacturing process, and said photo-optical system (8) comprises at least one camera (5) and at least one light source (6) with at least one backlight panel (6), between which the transparent solid-body block (4) can be positioned, which serve to determine a real image of said solid-body block (4) and said vessel model (1), and the transparent solid-body block (4) has smooth and reflection-reduced surfaces that sandwich a space curve of the blood vessel model (1).

2. Medical training model according to claim 1, **characterized in that** the photo-optical system (8) comprises at least one camera (5) and at least one light source (6), which can be integrated into an installation device (7) with translatory and/or rotatory degrees of freedom of movement and can be positioned relative to one another in the process.

3. Medical training model according to claim 2, **characterized in that** the installation device (7) is designed as a full-arch or C-arch head model of selectable geometry for setting different observation projection planes and/or views of the at least one blood vessel model (1) and which can be moved horizontally, vertically and about pivot axes for this purpose.

4. Medical training model according to any one of claims 1 to 3, **characterized in that** the image processing device (11) is program-controlled for digital subtraction imaging.

5. Medical training model according to claim 4, **characterized in that** color fluids are injectable into the at least one blood vessel model (1) for creating blank images and filling images of the at least one blood vessel model (1).

6. Medical training model according to any one of claims 1 to 5, **characterized in that** the at least one blood vessel model (1) is an individualizd blood vessel model (1) that is interchangeably connectable in at least one practice region to a fluid system of an anatomically replicated training model having a respective patient-specific replicated lumen (9).

7. Medical training model according to claim 6, **characterized in that** the at least one blood vessel model (1) is a blood vessel model (1) simulated with patient-specific geometry, which can be connected to the blood circulation system (2) via a hydraulic quick coupling.

8. Medical training model according to any one of claims 1 to 7, **characterized in that** a plurality of practice regions with blood vessel anatomical geometry can be implemented via cuts.

9. Medical training model according to any one of claims 1 to 8, **characterized in that** the replicated substitute circulatory system (2) is designed to simulate the human blood circulation system in terms of temperature and pressure of the fluid.

## Revendications

1. Modèle d'entraînement médical avec au moins un modèle de vaisseaux sanguins (1), qui peut être raccordé, dans au moins une région d'exercice, à un système de substitution de circulation sanguine (2) reproduit de manière anatomique et dans lequel un instrument réel (17) est employé, avec un dispositif de prise d'image (3) destiné à créer des images de mesure de l'au moins un modèle de vaisseaux sanguins (1), et avec un dispositif de traitement d'image (11), qui convertit les images de mesure prises en une représentation de vaisseaux sanguins sous forme d'image et la rend affichable sur un écran (12), dans lequel le dispositif de prise d'image (3) est réalisé comme un système photo-optique (8), qui prend des images par lumière transmise (13) comme des images de mesure de l'au moins un modèle de vaisseaux sanguins (1) pour la simulation d'une activité médicale, **caractérisé en ce que** l'au moins un modèle de vaisseaux sanguins (1) est disposé en étant reproduit dans un bloc de corps solide (4) fabriqué de manière transparente pour un contraste entre un bloc de corps solide transparent (4) et un instrument non transparent (17), les images par lumière transmise (13) peuvent être prises en contre-jour comme des images de mesure de l'au moins un modèle de vaisseaux sanguins (1) et le bloc de corps solide (4) est fabriqué à partir d'une masse de scellement avec une forme perdue d'un modèle de vaisseaux sanguins (1) reproduit de manière inversée ou par un procédé de fabrication additive, dans lequel le système photo-optique (8) comprend au moins une caméra (5) et comprend au moins une source de lumière (6) avec au moins un panneau de contre-lumière (6), entre lesquels le bloc de corps solide transparent (4) peut être positionné, lesquels servent à relever une image réelle du bloc de corps de corps solide transparent (4) et du modèle de vaisseaux (1) et le bloc solide transparent (4) présente des surfaces lisses et à réflexion réduite, qui délimitent une courbe spatiale du modèle de vaisseaux sanguins (1) en sandwich.

2. Modèle d'entraînement médical selon la revendication 1, **caractérisé en ce que** le système photo-optique (8) comprend au moins une caméra (5) et au moins une source de lumière (6), qui peuvent être intégrées dans un dispositif d'installation (7) avec des degrés de liberté de mouvement par translation et/ou par rotation et qui peuvent être positionnées l'une par rapport à l'autre.

3. Modèle d'entraînement médical selon la revendication 2, **caractérisé en ce que** le dispositif d'installation (7) est réalisé comme un modèle de tête en forme d'arc complet ou en forme d'arc en C de géométrie sélectionnable pour le réglage de différents plans de projection d'observation et/ou de vues sur l'au moins un modèle de vaisseaux sanguins (1), qui peut être déplacé par rapport à ceux-ci horizontalement, verticalement et autour d'axes de pivotement.

4. Modèle d'entraînement médical selon l'une quelconque des revendications 1 à 3, **caractérisé en ce que** le dispositif de traitement d'image (11) est conçu de manière commandée par programme pour une imagerie par soustraction numérique.

5. Modèle d'entraînement médical selon la revendication 4, **caractérisé en ce que** des liquides colorants peuvent être injectés dans l'au moins un modèle de vaisseaux sanguins (1) pour la création d'images vides et d'images de remplissage de l'au moins un modèle de vaisseaux sanguins (1).

6. Modèle d'entraînement médical selon l'une quelconque des revendications 1 à 5, **caractérisé en ce que** l'au moins un modèle de vaisseaux sanguins (1) est un modèle de vaisseaux sanguins (1) personnalisable, qui peut être raccordé de manière interchangeable, dans au moins une région d'exercice, à un système fluidique d'un modèle d'entraînement reproduit de manière anatomique avec une lumière (9) reproduite spécifiquement pour chaque patient.

7. Modèle d'entraînement médical selon la revendication 6, **caractérisé en ce que** l'au moins un modèle de vaisseaux sanguins (1) est un modèle de vaisseaux sanguins (1) reproduit avec une géométrie spécifique au patient, qui peut être raccordé au système de circulation sanguine (2) par l'intermédiaire d'un raccord rapide hydraulique.

8. Modèle d'entraînement médical selon l'une quelconque des revendications 1 à 7, **caractérisé en ce que** plusieurs régions d'exercice avec une géométrie anatomique de vaisseaux sanguins peuvent être mises en œuvre par l'intermédiaire d'interfaces.

9. Modèle d'entraînement médical selon l'une quelconque des revendications 1 à 8, **caractérisé en ce que** le système de substitution de circulation sanguine (2) est réalisé pour simuler le système de circulation sanguine humain en ce qui concerne la température et la pression du fluide.
